Europäisches Patentamt

European Patent Office

Office européen des brevets

(19)

(11) Publication number: **0 464 886 A2**

# EUROPEAN PATENT APPLICATION

(12)

(21) Application number: **91201509.6**

(22) Date of filing: **17.06.91**

(51) Int. Cl.⁵: **C08G 18/32**, C08G 18/66

(30) Priority: **06.07.90 US 548805**

(43) Date of publication of application:
**08.01.92 Bulletin 92/02**

(84) Designated Contracting States:
**DE FR GB**

(71) Applicant: **GENERAL MOTORS CORPORATION**
**General Motors Building 3044 West Grand**
**Boulevard**
**Detroit Michigan 48202(US)**

(72) Inventor: **Ashida, Kaneyoshi**
**28139 New Bedford**
**Farmington Hills, MI 48018(US)**
Inventor: **Ashtiani-Zarandi, Mansour**
**987 Smith**
**Birmingham, MI 48009(US)**

(74) Representative: **Haines, Arthur Donald et al**
**Patent Section Vauxhall Motors Limited 1st**
**Floor Gideon House 28 Chapel Street**
**Luton, Bedfordshire LU1 2SE(GB)**

(54) **Self-reinforcing polyurethane compositions.**

㊗ A polyurethane liquid crystal polymer-reinforced RIM composition having superior impact strength and flexural modulus is produced by a reaction-injection-moulding process. The chemistry involved in the preparation of this reinforced RIM material includes the simultaneous reaction and formation of a polyurethane liquid crystal polymer and a polyurethane RIM.

The present invention generally relates to a self-reinforcing polyurethane composition that can be easily processed in a reaction-injection process. More particularly, it is concerned with a liquid crystal-polymer-reinforced polyurethane material that can be easily processed in a reaction-injection-moulding process.

The process of reaction-injection-moulding (RIM) has been rapidly developed and widely used in recent years. A variety of RIM materials have been developed at the same time to utilize this process. Most of these materials, for instance, polyurethane RIM and epoxy RIM are thermoset polymers that are amorphous in nature. They generally have good mechanical strength and physical properties adequate for many automotive applications. For instance, polyurethane RIM has been widely used for automotive bumpers because of its good physical properties and its easy processability.

In some applications such as automobile body panels, only materials having very high impact strength and high flexural modulus can be used. However, the impact strength and the flexural modulus of a RIM material are usually inversely proportional in that the higher the impact strength the lower the flexural modulus.

Techniques to increase both the impact strength and the flexural modulus of plastics materials have been developed including the addition of fibre reinforcement and the use of liquid crystal polymers (hereinafter referred to as LCPs).

Fibre reinforcement has been used in making reinforced non-foamed reaction-injection-moulding (RRIM) composites for automobile exterior body panels. Examples of reinforcing fibres include chopped glass fibres and milled glass fibres in a length of 2.54 to 0.51 mm (1/10 to 1/50 inch). Mineral fibres such as wollastonite, gypsum whiskers and the like, also are used. These fibres, however, result in anisotropic physical properties and, as a consequence, glass flakes and mica are also required in conjunction with glass fibres to improve the anisotropy.

The reinforcing fibres also cause serious processing disadvantages and problems. For instance, the viscosity of a fibre-reinforced RIM system is greatly increased and thus causes abrasion problems in pumps and mixing heads. Furthermore, the high viscosity reduces the flowability of the RIM system in the mould cavity.

The addition of polyurethane liquid crystal polymer (polyurethane LCP) into a urethane RIM system avoids the processing and appearance problems caused by the fibre reinforcement. By liquid crystal polymers is meant polymers having crystallinity in liquid states, e.g., in solution or in a molten state.

Liquid crystal polymers are fibrous crystalline polymers and, therefore, the fibrous structure acts as reinforcement for the RIM system. Polyurethane LCPs have been previously reported by others in the field, for instance K. Iimura et al, Macromolecule Chemistry, Vol. 182, 2569 (1981), and M. Tanaka et al, Polymer Preprint, Japan, Vol. 33, No. 7, 1647 (1984). However, these polyurethane LCPs are thermally unstable and, therefore, they decompose in the course of melt-processing, e.g., injection moulding, or blow moulding. Heretofore there was no literature teaching how to incorporate polyurethane LCPs into polyurethane RIM.

It is, therefore, an object of the present invention to provide a polyurethane LCP-reinforced non-formed RIM material that can be easily processed in a reaction-injection-moulding process.

It is another object of the present invention to provide a polyurethane LCP-reinforced RIM material that has good thermal stability for use in a reaction-injection-moulding process to produce parts of high impact strength and high flexural modulus.

In accordance with a preferred practice of the present invention, a polyurethane LCP-reinforced RIM material having superior impact strength and flexural modulus can be produced by a reaction-injection-moulding process. This reinforced RIM material can be rapidly processed in a reaction-injection-moulding machine to produce a high impact strength and high flexural modulus part. The chemistry involved in the preparation of this reinforced RIM material includes two kinds of simultaneous reactions, i.e., a polyurethane LCP formation and a polyurethane RIM formation.

The polyurethane RIM formation takes place by the reaction between a liquid polyisocyante and a high molecular weight polyether polyol.

The polyurethane LCP formation takes place by the reaction between a liquid polyisocyanate and a $C_6$ - $C_{10}$ alkane having two terminal hydroxyl groups (or alkane diols), such as 1,6-hexanediol.

In other words, polyurethane LCPs can be incorporated into the RIM system simply by the addition of an alkane diol selected from $C_6$ - $C_{10}$ alkane diols. These alkane diols play an important part as the spacer segments of LCPs.

The novel technique of the present invention, therefore, produces polyurethane LCP in situ in a polyurethane RIM matrix resin and is incorporated into the matrix resin simultaneously during the reaction-injection-moulding process. In the novel technique of the present invention, the blending of a polyurethane LCP into a polyurethane matrix resin, i.e., a technique taught by previous workers, is not necessary. Since polyurethane LCP usually decomposes at melt-processing temperature, the blending of a polyurethane LCP into a polyurethane material would not be possible. The novel technique of the present invention, therefore, overcomes the decomposition problem of the polyurethane LCP experienced by other workers. More importantly, this novel invention solves many processing problems caused by the addition of fibre reinforcement.

The invention and how it may be performed are hereinafter particularly described with reference to the accompanying drawings, in which:

Figure 1 is a process flow diagram of the present invention.

Figure 2 is a graph showing the improvement in impact strength of the polyurethane LCP-reinforced RIM materials of the present invention.

Figure 3 is a graph showing the dependence of the flexural moduli on weight percent LCP-forming agent for the polyurethane LCP-reinforced RIM materials of the present invention.

The present invention is a novel technique which allows for the making of a high impact and high flexural modulus RIM product by the simultaneous formation of a polyurethane LCP and a polyurethane RIM by the injection of reactive components into a mould.

The advantages of the novel technique of the present invention are threefold. First, since fibre reinforcements are not used, no abrasion problems in pumps and mixing heads can occur. Secondly, since no viscosity increase occurs when no fibre reinforcements are added, the circulation and injection of the RIM reactive components can be easily performed without many potential processing problems. Thirdly, since the polyurethane LCP is formed in situ during the reaction-injection-moulding process in the matrix of the polyurethane RIM, the decomposition problems of LCP when blended into a polyurethane material are avoided.

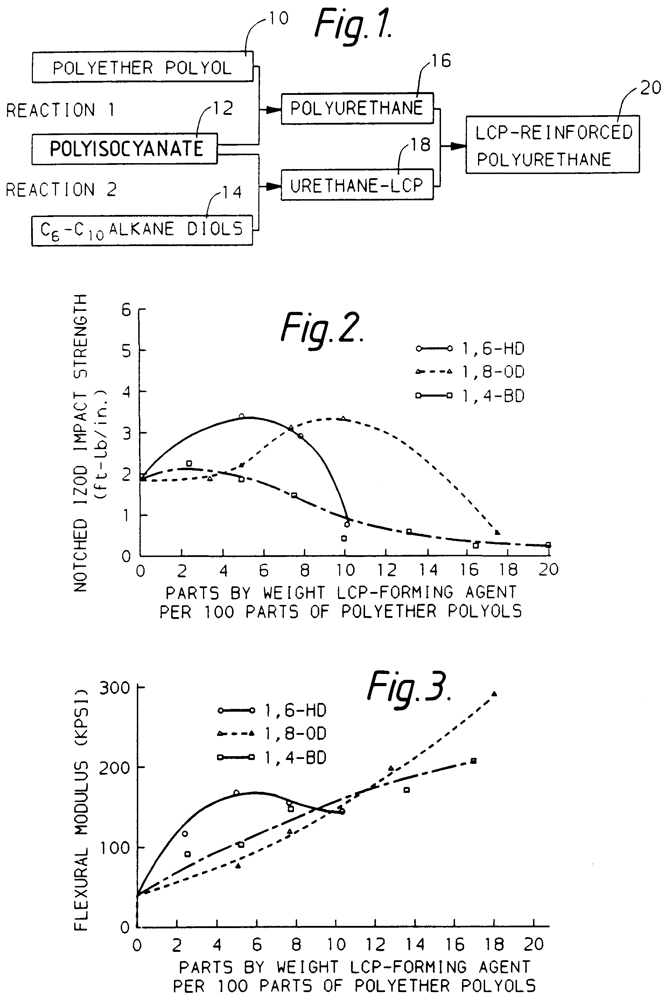

Referring initially to Figure 1 where a process flow diagram of the novel method of the invention is shown, the method is composed of two parallel and simultaneous reactions, i.e., reaction one and reaction two as shown in Figure 1 for the formation of two different polymers. In reaction one, a polyol 10 and a polyisocyanate 12 reacts to form a polyurethane polymer 16. In reaction two, which occurs simultaneously with reaction one, the polyisocyanate 12 reacts with a $C_6$ - $C_{10}$ alkane diol 14 to form a urethane-LCP 18. Since the two reactions occur simultaneously in the same mould cavity, the urethane-LCP 18 is formed in situ with the polyurethane polymers 16 forming a urethane-LCP reinforced polyurethane RIM material 20.

Figure 2 shows the effect of parts by weight of polyurethane LCP-forming agent on the notched Izod impact strength. The alkane diols employed were 1,6-hexanediol, 1,8-octanediol and 1,4-butanediol.

As shown in Figure 2, 1,4-butanediol showed no reinforcement effect due to its short chain as a spacer-segment in the formation of LCPs. In contrast, the other two diols showed remarkable reinforcing effects in the Izod impact strength. The maximum strengths of the two were shifted due to their lengths of chain as spacer segments.

Figure 3 shows the effect of parts by weight of polyurethane LCP-forming agent on the flexural modulus of RIM products.

The addition of 1,6-hexanediol shows a maximum value was achieved at approximately 5 weight percent. For 1,8-hexanediol and 1,4-butanediol, the flexural moduli increase with the amount of the diols.

By comparing the two figures, only the addition of 1,6-hexanediol and 1,8-octanediol showed improvement in both the flexural modulus and the impact strength properties which are normally recognized to have an inversely proportional relationship to one another.

## Table 1   Control Polymer

### Formulation

| | |
|---|---|
| Niax 31-28 (g) | 64 |
| TP 440 (g) | 45 |
| Isonate 143L (g) | 53 |
| Dabco T-12 (drops) | 4 |
| Dabco R-8020 (drops) | 6 |
| NCO Index | 105 |
| Mould Temperature (°C) | 80 |
| Mould Closing Time (min.) | 15 |

### Physical Properties

| | |
|---|---|
| Notched Izod<br>ft. lb./in. | 1.03 |
| Flexural Modulus<br>Kpsi | 147 |

Niax 31-28, Isonate 143L, Dabco T-12 and Dabco R-8020 are all Registered Trade Marks.

Table 1 shows the formulation and the physical properties of a control polymer. The formulation was chosen from a series of formulations by using a combination of a long chain polyether triol and a short chain polyether triol to obtain both high impact strength and high flexural modulus at the same time without incorporating LCPs.

The polyisocyanate used in the present invention is an organic polyisocyanate which can be selected from either aromatic or aliphatic polyisocyanates.

Aromatic polyisocyanates include diphenylmethane di-isocyanate (MDI), liquid-type MDI such as carbodi-imide-modified MDI, urethane-modified MDI such as MDI prepolymers, p-phenylene di-isocyanate, m-phenylene di-isocyanate, toluene di-isocyanate (TDI), and 1,5-naphthylene di-isocyanate. Preferred polyisocyanates are liquid-type MDI.

The aralkyl polyisocyanates can also be used as the polyisocyanate component, which include m- and p-xylylene di-isocyanate and tetramethyl xylylene di-isocyanate.

The polyols used in the present invention for making polyurethanes include polyether polyols, polyester polyols having a functionality of at least two and an equivalent weight of at least 100, more preferably at least 1000.

The polyether polyols include polyoxypropylene polyols, polyoxypropylene-polyoxyethylene block copolymer polyols, polytetramethylene ether glycols and acrylonitrile and/or styrene-graft polyether polyols.

The polyester polyols include polycaprolactone polyols and various polyester polyols prepared by the reaction of an aliphatic dibasic acid and an aliphatic glycol.

The LCP spacer-forming agents to be used in the present invention are $C_6$ to $C_{10}$ alkanes having two terminal hydroxyl groups, i.e., alkane diols.

These LCP spacer-forming agents react with organic polyisocyanate to form LCPs which are composed of a spacer (a flexible chain) and a mesogen (a rigid segment). LCPs have fibrous structures and act as reinforcing materials in the polyurethane matrix resins.

Table 2 shows raw materials employed.

4

## Table 2   Sources of Raw Materials

| Designation | Chemical Composition | Equivalent Weight | Supplier |
|---|---|---|---|
| Niax 31-28 | Acrylonitrile-grafted polyether polyol | 2000 | Union Carbide |
| TP-440 | Polyether triol | 140 | BASF |
| Isonate 143L | Carbodi-imide-modified MDI | 144 | Dow Chemical |
| Dabco T-12 | Dibutyltin dilaurate | | Air Products |
| Dabco R-8020 | t-Amine catalyst | | Air Products |
| 1,4-BD | 1,4-butanediol | 45 | Aldrich |
| 1,6-HD | 1,6-hexanediol | 59 | Aldrich |
| 1,8-OD | 1,8-octanediol | 73 | Aldrich |

Niax 31-28, Isonate 143L, Dabco T-12 and Dabco R-8020 are all Registered Trade Marks.

The formation of LCP was confirmed by using DSC (Differential scanning calorimetry) and electron microscopy.

The OH-terminated alkanes include hexamethylene glycol (hexane 1:6 -diol), heptane - 1:7-diol, octane - 1:8-diol, nonane - 1:9-diol, and decane - 1:10-diol. The length of the alkane chain is important to form LCPs.

The polyurethane formation reaction needs catalysts, such as tin catalysts (dibutyl tin dilaurate or stannous octoate), or amine catalysts (triethylene diamine, 1,8-diazabicyclo [5,4,9]undecane-7, or bis-[dimethylaminoethyl] ether).

Optionally, cross-linkers such as diethyl tolulene diamine, or chain-extenders such as ethylene glycol or 1,4-butanediol can also be used for making polyurethane elastomers as matrix resins for RRIM products. Surfactants, colourants, and internal mould release agents also can be used.

A desirable isocyanate index of NCO/OH is between 100 to 105, but different isocyanate indexes such as between 90 to 150 may also be used.

As shown in Figures 2 and 3, a suitable range of LCP-forming compound to be added is between 2 to 10 parts by weight per 100 of polyether polyols for either 1,6-hexane diol or 1,8-octane diol. A preferred range of LCP-forming compound to be added is about 2 to 8 parts by weight per 100 parts of polyether polyols in the case of 1,6-hexane diol, and 5 to 10 parts by weight per 100 parts of polyether polyols in the case of 1,8-octane diol.

Table 3 shows the effect of 1,4-butanediol as spacer-forming agent for LCPs on Izod impact strength and flexural modulus. Table 4 shows the effect of 1,6-hexanediol as spacer-forming agent for LCPs on Izod impact strength and flexural modulus. Table 5 shows the effect of 1,8-octanediol as spacer-forming agent for LCPs on Izod impact strength and flexural modulus. These data are also shown in Figures 2 and 3.

While the present invention has been described in terms of several preferred embodiments thereof, it is to be appreciated that many modifications and variations of the present invention are possible in light of the above disclosure It is, therefore, to be understood that within the invention there may be embodiments thereof other than as specifically described herein, which remain within the scope of the appended claims.

5

## Table 3   Control Polymer/
Effect Of 1,4-Butanediol

| Formulation | 1 | 2 | 3 | 4 | 5 | 6 | 7 | 8 |
|---|---|---|---|---|---|---|---|---|
| Niax 31-28, (g) | 36 | 36 | 36 | 36 | 36 | 36 | 36 | 36 |
| TP-440, (g) | 25 | 25 | 25 | 25 | 25 | 25 | 25 | 25 |
| 1,4-BD, (g) | 16 | 12.2 | 10.0 | 8.0 | 6.0 | 4.5 | 3.0 | 1.5 |
| 1,4-BD * | 26.2 | 20.0 | 16.4 | 13.1 | 9.8 | 7.5 | 5.0 | 2.5 |
| Isonate 143L (g) | 82.7 | 70.4 | 63.0 | 56.0 | 49.0 | 44.2 | 39.3 | 34.6 |
| Dabco T-12 (drops) | 2 | 2 | 2 | 2 | 2 | 2 | 2 | 2 |
| Mould Temp (°C) | 100 | 100 | 100 | 100 | 100 | 100 | 100 | 100 |
| NCO Index | 105 | <--- | <--- | <--- | <--- | <--- | <--- | <--- |

### Properties

| | 1 | 2 | 3 | 4 | 5 | 6 | 7 | 8 |
|---|---|---|---|---|---|---|---|---|
| Izod Impact (ft. lb./in.) | 0.60 | 0.29 | 0.29 | 0.68 | 0.44 | 1.5 | 1.8 | 2.4 |
| Flexural Modulus Kpsi | 185 | 226 | 205 | 164 | 205 | 147 | 102 | 85 |

*parts by weight of 1,4-Butanediol per 100 parts of polyether polyols (i.e., Niax 31-28 plus TP 440).

Niax 31-28, Isonate 143L, Dabco T-12 and Dabco R-8020 are all Registered Trade Marks.

6

### Table 4 Formulations 9-13/ Effect of 1,6 Hexanediol

| Formulation | 9 | 10 | 11 | 12 | 13 |
|---|---|---|---|---|---|
| Niax 31-28 (g) | 64 | 64 | 64 | 64 | 64 |
| TP 440 (g) | 45 | 45 | 45 | 45 | 45 |
| 1,6 HD (g) | 6.0 | 11.8 | 17.2 | 22.0 | 27.0 |
| 1,6-HD* | 5.5 | 10.8 | 15.8 | 20.2 | 24.2 |
| Isonate 143L (g) | 68 | 81 | 93 | 104 | 121 |
| NCO Index | 105 | 105 | 105 | 105 | 105 |
| Dabco T-12 (drops) | 2 | 2 | 2 | 2 | 2 |
| Dabco R-820 (drops) | 1 | 1 | 1 | 1 | 1 |
| **Processing** | | | | | |
| Mould Temp. (°C) | 100 | 100 | 100 | 100 | 100 |
| Mould retention time (min.) | 15 | 15 | 15 | 15 | 15 |
| **Properties** | | | | | |
| Izod Impact ft. lb./in. | 3.58 | 2.80 | 0.73 | 0.40 | 0.30 |
| Flexural Modulus Kpsi | 166 | 246 | 287 | 259 | 295 |

*parts by weight of 1,6 Hexanediol per 100 parts of polyether polyols (i.e., Niax 31-28 plus TP-440).

Niax 31-28, Isonate 143L, Dabco T-12 and Dabco R-8020 are all Registered Trade Marks.

**Table 5** Formulations 14-20/
Effect of 1,8-Octanediol

| Formulation | 14 | 15 | 16 | 17 | 18 | 19 | 20 |
|---|---|---|---|---|---|---|---|
| Niax 31-28(g) | 64 | 64 | 64 | 64 | 64 | 64 | 64 |
| TP 440 (g) | 45 | 45 | 45 | 45 | 45 | 45 | 45 |
| 1,8-OD (g) | 2.73 | 3.85 | 5.45 | 8.18 | 10.9 | 15.1 | 21.1 |
| 1,8-OD* | 2.5 | 3.5 | 5.0 | 7.5 | 10 | 12.5 | 17.5 |
| Isonate 143L (g) | 58.3 | 60.6 | 64.0 | 70.0 | 75.1 | 89.5 | 102 |
| NCO Index | 105 | 105 | 105 | 105 | 105 | 105 | 105 |
| Dabco T-12 (drops) | 3 | 3 | 3 | 3 | 3 | 3 | 3 |
| Dabco R-8020 (drops) | 1 | 1 | 1 | 0 | 0 | 0 | 0 |
| **Processing** | | | | | | | |
| Mould Temp (°C) | 100 | 100 | 100 | 100 | 100 | 100 | 100 |
| Mould retention time (min.) | 15 | 15 | 15 | 15 | 15 | 15 | 15 |
| **Properties** | | | | | | | |
| Izod Impact ft. lb./in. | 2.01 | 1.96 | 2.25 | 3.25 | 3.50 | 0.56 | 0.57 |
| Flexural Modulus Kpsi | 163 | 180 | 82 | 123 | 82 | 197 | 287 |

*parts by weight of 1,8 Octanediol per 100 parts of polyether polyol (i.e., Niax 31-28 plus TP-440).

Niax 31-28, Isonate 143L, Dabco T-12 and Dabco R-8020 are all Registered Trade Marks.

Claims

1. A self-reinforcing non-foamed polyurethane reaction-injection-moulded article, <u>characterised in that</u> the article is the polymerization reaction product of the reactants comprising:
   (a) an organic polyisocyanate,
   (b) at least one polyol, and
   (c) an alkane diol having between six to ten carbon atoms in an amount of between 2 to 10 parts by weight per 100 parts of the total weight of said at least one polyol.

2. A reinforced non-foamed polyurethane reaction-injection-moulding composition <u>characterised in that</u> the composition is a liquid crystal polymer-reinforced non-foamed polyurethane reaction injection moulding composition having superior impact strength and flexural modulus, said composition being a reaction product of the reactants comprising:

EP 0 464 886 A2

(a) an organic polyisocyanate,
(b) at least one polyol having an average equivalent weight of more than 100 and a functionality of at least two, and
(c) an alkane diol having between six to ten carbon atoms in an amount of between 2 to 10 parts by weight per 100 parts of the total weight of said at least one polyol.

3. A reinforced non-foamed polyurethane reaction-injection-moulding composition according to claim 2, characterised in that the alkane diol is 1,6-hexanediol in an amount of between 2 to 8 parts by weight per 100 parts of the total weight of said at least one polyol.

4. A reinforced non-foamed polyurethane reaction-injection-moulding composition according to claim 2, characterised in that the alkane diol is 1,8-octanediol in an amount of between 5 to 10 parts by weight per 100 parts of the total weight of said at least one polyol.

5. A reinforced non-foamed polyurethane reaction-injection-moulding composition according to claim 2, characterised in that the organic polyisocyanate is a modified diphenylmethane di-isocyanate in a liquid state.

6. A reinforced non-foamed polyurethane reaction-injection-moulding composition according to claim 2, characterised in that said at least one polyol is a blend of a trifunctional polyether polyol having an equivalent weight of between 1000 to 5000 and a trifunctional polyether polyol having an equivalent weight of between 100 to 500.

7. A method of making reinforced non-foamed polyurethane reaction-injection-moulding products, characterised in that the products are liquid crystal polymer-reinforced non-foamed polyurethane reaction-injection-moulding products, and the method comprises reacting an organic polyisocyanate with at least one polyol having a functionality of no less than two and an average equivalent weight of more than 100, and an alkane diol having six to ten carbon atoms in the presence of a catalyst.

8. A method of making reinforced non-foamed polyurethane reaction-injection-moulding products according to claim 7, characterised in that the alkane diol is 1,6-hexane diol.

9. A method of making a reinforced non-foamed polyurethane reaction-injection-moulding products according to claim 7, characterised in that the alkane diol is 1,8-octane diol.

10. A method of making reinforced non-foamed polyurethane reaction-injection-moulding products according to claim 7, characterised in that said at least one polyol is a blend of a trifunctional polyether polyol having an equivalent weight of between 1000 to 5000 and a trifunctional polyether polyol having an equivalent weight of between 100 to 500.

9

Fig.1.

Fig.2.

Fig.3.